# EUROPEAN PATENT SPECIFICATION

(11) **EP 0 600 597 B1**
(45) Date of publication and mention of the grant of the patent: **05.02.1997**
(21) Application number: 93308394.1
(22) Date of filing: 21.10.1993
(51) Int. Cl.: C08J 5/12, C09J 151/04, B32B 27/08, B32B 7/10, C08L 23/02

(54) **Imparting improved adhesion to polyolefin substrates**
Verleihen verbesserter Adhäsioneigenschaften an Polyolefinsubstrate
Rendre des propriétés d'adhésion améliorées aux substrats en poly-oléfine

(30) Priority: 26.10.1992 GB 9222490; 29.09.1993 US 128938
(43) Date of publication of application: 08.06.1994
(73) Proprietor: ROHM AND HAAS COMPANY, Philadelphia Pennsylvania 19105 (US)
(72) Inventor: Harvey, Noel Gray, North Wales, Pennslyvania 19454 (US)
(74) Representative: Angell, David Whilton

(56) References cited:
- EP-A- 0 087 304

## Description

This invention concerns imparting improved adhesion properties to polyolefin substrates, especially polypropylene. These properties may improve adhesion of acrylic-based or other protective polymers, which may be applied, for example, in the form of a plastic coating or a latex or solvent-based paint, of pressure sensitive adhesives, which adhesives may serve to bond cloth, carpet, non-woven fabrics or plastics; or of inks and colorants.

Matrix polyolefins used as substrates for acrylic plastics or for paints, inks, or latices, for example where the latter impart weatherability, decorative effects or printability, are useful in the assemblage of automobiles and other vehicles, such as automotive interiors, trunks (boots), truck (lorry) cabs, automotive exteriors, such as fender liners and bumpers, railroad car interiors or van (caravan) trim, equipment housing or furniture, where they offer advantages in cost and formability over metal or wood. Unfortunately, the polyolefins such as polypropylene or polyethylene do not adhere well without special treatment.

GB-A92-164,078 discloses that acrylic plastics, more specifically polymers of methyl methacrylate, are useful for the above purposes when combined with a cheaper, tougher polyolefin in a laminar structure (which structure may require a laminating adhesive in the case of polyolefins to prevent delamination), and discloses many potential uses for such a combination. US-A-4,957,974 discloses the use of specific graft copolymers of polyolefins and polymethacrylates, when further blended with polypropylene, as useful for improving printability, and the graft copolymers as tie layers between otherwise incompatible polymers. US-A-5,035,933 discloses the use of such graft copolymers as tie layers between polyolefins and certain barrier polymers. In US-A-5,237,004 discloses a thermoplastic composition having modified optical properties which comprises a thermoplastic matrix polymer and, distributed throughout the matrix, polymer from 0.1% to 40% of the total composition weight of spherical particles of core/shell having an average diameter of from 2 to 15 microns (and a narrow particle size distribution), the outer shell of which is compatible with the matrix polymer. Polyolefins are known to the art to be incompatible with poly(methyl methacrylate).

This invention is directed towards the provision of further methods for improving the adhesion in laminates of polyolefins, especially polypropylene, and (meth)acrylic polymers, which are convenient and effective for application of latices, paints, inks and other coatings.

The invention provides a process for imparting improved adhesive properties to polyolefin which comprises
(a) forming a composite comprising a first film or sheet formed from particles of multi-stage polymer, having an average diameter from 2 microns to 15 microns and containing a crosslinked rubbery first-stage containing at least 80% by weight butyl acrylate units and a final-stage containing at least 80% by weight methyl methacrylate units in a weight ratio of first-stage to final stage polymer of at least 3/2, applied by heat and pressure to a polyolefin sheet or film, wherein the polyolefin is not rubber-modified; and
(b) separating the two films or sheets mechanically to leave a sufficient residue of the multi-stage polymer at or near the surface of the polyolefin to act as a tie-layer for laminating or coating a further sheet or film thereto. Polar polymer, preferably (meth) acrylic polymer, sheet or film may then be laminated to the so treated polyolefin sheet or film, or an acrylic latex may be applied and dried or allowed to dry. Alternatively acrylic-based solvent paints, urethane-based paints, inks or other adherents may be applied in a similar manner to the application of the acrylic latex.

The aims of the invention may be achieved in preferred manner by using, as the multi-stage polymer one such as described in EP-A-269,324, (US-A-5,237,004) which should be consulted for details. The invention also extends to the use, with the polypropylene or other polyolefin, of an additive as described in US-A-4,957,974 (which should be consulted for details) for the purposes of improving its melt processing and sag resistance during thermoforming and this provides another preferred manner of achieving the aims of the invention. Surprisingly, the method is not applicable to the so-called toughened polyolefins TPOs, that is, polypropylene toughened with an EPDM elastomer; although the matte appearance is produced on the TPO surface, retention of the thin tie-coat is not detected, and the adhesion of paints is not improved.

We define film as having a thickness of 50 mils (1.27mm) or less and sheet as having a thickness greater than 50 mils (1.27 mm).

The means for making the first film or sheet is not critical and any conventional method, such as extrusion, calendering or compressing molding is suitable. It may be applied to the polypropylene film or sheet by compression in a press with heat, or by application through heated rolls, such as calendering. Continuous processes for extruding one or both films or sheets, contacting, separating, and re-using the first film or sheet in contact with additional polypropylene may be envisaged.

The first film or sheet may also be formed in situ by applying the powder or particles to the surface of the polyolefin substrate and compressing under heat and pressure to form the film or sheet of the first polymer contiguous to the polyolefin. It should be noted that the first polymers as tie layers are less effective in promoting adhesion; it is the surface contact with and then removal from the polypropylene which activates the polypropylene surface. Lamination of the final polar polymer may be conducted by methods described above.

The polyolefin containing the activated surface may be directly treated with paints, ink or other coating. The activated surface has small surface holes, similar in size to the crosslinked core portion of the first polymer; the surface, even after painting, has an attractive matte surface. However, acceptable adhesion of paint is found only when solvent-based acrylic paints or urethane-based paints are utilized; polyester/melamine-based automotive paints may not exhibit acceptable adhesion. The polar polymer sheet or film to be laminated or adhered is preferably a (meth)acrylic polymer, and more preferably a sheet or film prepared predominantly, that is from at least about 80 weight-percent, of methyl methacrylate. Other polar polymers may be utilized, such as poly(vinyl chloride), polyamides, poly(ethylene terephthalate, and polycarbonate.

The resulting laminates may, for example be painted, adhered to carpet or printed, and the like. They may be thermoformed into useful objects of commerce and transportation, such as machine housings, containers or automotive parts.

### EXAMPLE I

A film 0.38 mm. thick is prepared by compression molding (240 °C., ca. 20 metric tons) a polymer prepared by the process of Example 8 of European Patent Application 269,324, now U.S. Patent 5,237,004. The polymer has an overall particle diameter of ca. 8 microns, and comprises a core which is predominantly formed from butyl acrylate, and a shell which is methyl methacrylate. The poly(methyl methacrylate) shell is believed incompatible with polyolefins. Separately is prepared a film of a commercial polypropylene of 0.8 MFR of thickness 0.25 mm. The two films are pressed together in a Carver press under a pressure of circa 20 metric tons and a temperature of 240 degrees C. The films could be pulled apart by hand. The side of the polypropylene which contacts the acrylic polymer is matte in appearance, and is paintable. Paintability is judged by spray-painting parts with a standard solvent-based commercial interior/exterior enamel; after drying, the surface is subjected to a standard cross-hatch peel test, with essentially no paint lost to either adhesive or cohesive failure.

Microscopy indicates that the matte, paintable surface so obtained is fibrous. The shear deformation of the surface during the peeling results in fiber formation which extends ca. 30-40 nm. into the polypropylene surface. FTIR spectroscopy indicates the presence of an "acrylic" residue (ester carbonyl) at the surface.

### COMPARATIVE EXAMPLES

In a similar manner, films are made from a core/shell polymer similar to that described in Example 26 of U.S. Patent 4,096,202 and from a core/shell polymer of a 75/25 first-stage ratio but otherwise similar to that core/shell polymer described in Example 16 of European Patent Application 259,097. These two polymers when applied by the method of Example I also present a matted paintable surface, but adhesion of the solvent paint is much poorer than in Example I. Multi-stage polymers are prepared by the method of U.S. Patent 5,237,004, but with final stages which are polymers predominantly of isobutyl methacrylate or isobornyl methacrylate. Again, although a matted painted surface could be prepared, adhesion of the solvent paint is not acceptable.

## Claims

1. A process for imparting improved adhesive properties to polyolefin which comprises:
(a) forming a composite comprising a first film or sheet formed from particles of multi-stage polymer, having an average diameter from 2 microns to 15 microns and containing a crosslinked rubbery first-stage containing at least 80% by weight butyl acrylate units and a final-stage containing at least 80% by weight methyl methacrylate units in a weight ratio of first-stage to final stage polymer of at least 3/2, applied by heat and pressure to a polyolefin sheet or film, wherein the polyolefin is not rubber-modified; and
(b) separating the two films or sheets mechanically to leave a sufficient residue of the multi-stage polymer at or near the surface of the polyolefin to act as a tie-layer for laminating or coating a further sheet or film thereto.

2. A process as claimed in Claim 1 wherein the polyolefin is polypropylene or non-rubbery propylene/ethylene copolymer.

3. A process as claimed in Claim 1 or 2 wherein a polyolefin is adhered to a (meth)acrylic polymer.

4. A process for adhering a coating, ink, or paint to a polyolefin substrate, which comprises a process as claimed in any preceding Claim followed by the further steps of
(a) applying a latex, solvent-based acrylic paint, urethane-based paint or ink to a surface of the polyolefin sheet or film bearing the tie-layer; and
(b) drying the latex, paint, or ink, or allowing it to dry, to an adherent film.

5. A process as claimed in Claim 4 wherein the paint is a solvent-based acrylic paint or a urethane-based paint.

6. A process for adhering a film or sheet of polar polymer to a polyolefin substrate which comprises a process as claimed in any of Claims 1 to 3 followed by the further step of laminating a film or sheet of polar polymer to a surface of the polyolefin sheet or film bearing the tie layer.

## Patentansprüche

1. Verfahren zur Verleihung verbesserter Adhäsionseigenschaften an Polyolefin, umfassend:
(a) Bildung eines Verbunds, der einen ersten Film oder eine erste Folie umfaßt, der/die aus Teilchen von mehrstufigem Polymeren gebildet ist, die einen durchschnittlichen Durchmesser von 2 µm bis 15 µm haben und eine vernetzte kautschukartige erste Stufe enthalten, welche wenigstens 80 Gew.-% Butylacrylateinheiten aufweist und eine Endstufe, die wenigstens 80 Gew.-% Methylmethacrylat-Einheiten aufweist, in einem Gewichtsverhältnis des Polymeren der ersten Stufe zu dem der Endstufe von wenigstens 3/2, aufgebracht durch Hitze und Druck auf eine Polyolefinfolie oder einen Film, wobei das Polyolefin nicht kautschukmodifiziert ist, und
(b) mechanisches Trennen der zwei Filme oder Folien, um ausreichend Rückstand des mehrstufigen Polymeren an oder nahe der Oberfläche des Polyolefins zu hinterlassen, um als Bindeschicht zum Laminieren oder Aufschichten von weiterer Folie oder weiterem Film darauf zu hinterlassen.

2. Verfahren nach Anspruch 1, dadurch gekennzeichnet, daß das Polyolefin Polypropylen oder ein nicht kautschukartiges Propylen/Ethylencopolymeres ist.

3. Verfahren nach Anspruch 1 oder 2, dadurch gekennzeichnet, daß das Polyolefin an ein (Meth)acrylpolymres angehaftet wird.

4. Verfahren zur Adhäsion einer Beschichtung, Druckfarbe oder eines Anstrichmittels an ein Polyolefinsubstrat, umfassend ein Verfahren gemäß einem der vorhergehenden Ansprüche, gefolgt von den weiteren Stufen
(a) Aufbringen eines Latex, eines Acrylanstrichs auf Lösungsmittelbasis, eines Anstrichs auf Urethanbasis oder einer Druckfarbe auf die Oberfläche der Polyolefinfolie oder des Films, welche/welcher die Bindeschicht trägt, und
(b) Trocknen des Latex, Anstrichs oder der Druckfarbe oder Trocknenlassen an dem angehafteten Film.

5. Verfahren nach Anspruch 4, dadurch gekennzeichnet, daß der Anstrich ein Acrylanstrich auf Lösungsmittelbasis oder ein Anstrich auf Urethanbasis ist.

6. Verfahren zum Anhaften eines Films oder einer Folie von polarem Polymeren an ein Polyolefinsubstrat, umfassend ein Verfahren nach irgendeinem der Ansprüche 1 bis 3, gefolgt von der weiteren Stufe des Laminierens eines Films oder einer Folie aus polarem Polymeren an eine Oberfläche der Polyolefinfolie oder Polyolefifilms, welche die Bindeschicht trägt.

## Revendications

1. Procédé permettant de conférer des propriétés d'adhérence améliorée à une polyoléfine, ledit procédé comprenant les étapes consistant à :
(a) former un composite comprenant un premier film ou une première feuille formée de particules d'un polymère de plusieurs couches, ayant un diamètre moyen de 2 µm à 15 µm et contenant une première couche caoutchouteuse réticulée contenant au moins 80 % en poids d'unités d'acrylate de butyle et une couche finale contenant au moins 80 % en poids d'unités de méthacrylate de méthyle dans un rapport pondéral de la première couche à la couche finale du polymère d'au moins 3/2, ledit polymère étant appliqué par chaleur et pression à une feuille ou un film de polyoléfine, la polyoléfine n'étant pas modifiée par un caoutchouc, et
(b) séparer mécaniquement les deux films ou feuilles pour laisser un résidu suffisant du polymère multicouches sur la surface ou à proximité de la surface de la polyoléfine pour jouer le rôle de couche d'accrochage pour y laminer ou appliquer une autre feuille ou un autre film.

2. Procédé selon la revendication 1, dans lequel la polyoléfine est du polypropylène ou un copolymère de propylène/éthylène non caoutchouteux.

3. Procédé selon la revendication 1 ou 2, dans lequel une polyoléfine est collée à un polymère (méth)acrylique.

4. Procédé d'adhérence d'un revêtement, d'une encre ou d'une peinture à un substrat de polyoléfine, qui comprend un procédé selon l'une quelconque des revendications précédentes suivi des autres étapes consistant à :
(a) appliquer un latex, une peinture acrylique à base de solvant, une peinture à base d'uréthane ou une encre à la surface d'une feuille ou d'un film de polyoléfine portant la couche d'accrochage, et
(b) sécher le latex, la peinture ou l'encre ou laisser sécher ces derniers pour former un film d'adhésion.

5. Procédé selon la revendication 4, dans lequel la peinture est une peinture acrylique à base de solvant ou une peinture à base d'uréthane.

6. Procédé permettant de faire adhérer un film ou une feuille d'un polymère polaire à un substrat de polyoléfine qui comprend un procédé selon l'une quelconque des revendications 1 à 3, suivi d'une autre étape qui consiste à laminer un film ou une feuille de polymère polaire à la surface d'une feuille ou d'un film de polyoléfine portant la couche d'accrochage.
